Europäisches Patentamt

European Patent Office

Office européen des brevets

(19)

(11) Veröffentlichungsnummer : **0 392 526 B1**

# (12) EUROPÄISCHE PATENTSCHRIFT

(45) Veröffentlichungstag der Patentschrift :
**12.08.92 Patentblatt 92/33**

(51) Int. Cl.⁵ : **F02K 1/12,** F02K 7/16,
F02K 1/60

(21) Anmeldenummer : **90107010.2**

(22) Anmeldetag : **11.04.90**

(54) **Schubdüse.**

(30) Priorität : **14.04.89 DE 3912331**

(43) Veröffentlichungstag der Anmeldung :
**17.10.90 Patentblatt 90/42**

(45) Bekanntmachung des Hinweises auf die
Patenterteilung :
**12.08.92 Patentblatt 92/33**

(84) Benannte Vertragsstaaten :
**BE CH DE FR GB IT LI**

(56) Entgegenhaltungen :
**DE-A- 2 711 936**

(56) Entgegenhaltungen :
DE-C- 3 811 614
FR-A- 1 225 736
GB-A- 1 102 571
GB-A- 2 077 360
GB-A- 2 156 004
US-A- 2 625 008
US-A- 2 909 894

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Enderle, Heinrich
Tölzer Strasse 42
W-8038 Gröbenzell (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 392 526 B1

EP 0 392 526 B1

## Beschreibung

Die Erfindung bezieht sich auf eine Schubdüse nach dem Oberbegriff des Patentanspruchs 1 sowie ein Verfahren zu deren Einstellung abhängig von verschiedenen Fluggeschwindigkeiten.

Der nicht vorveröffentlichte Patentanmeldung DE-A-3 901 487, vom selben Anmelder, lag die Aufgabe zugrunde, eine Schubdüse zu schaffen, die als Überschallexpansionsdüse insbesondere eine über einen weiten Betriebsbereich günstige Verstellung der Düsenhalsquerschnittsfläche erreichen läßt, ohne Verdichtungsstöße zu verursachen. Insbesondere sollte ferner die Düsenströmung an einen großen Umgebungsdruckbereich (extrem unterschiedliche Flughöhen) schuboptimal angepaßt werden können.

Gelöst wurde diese Aufgabe durch die im Oberbegriff des Patentanspruchs 1 angegebenen Merkmale.

Eine Schubdüse dieser Art ist ferner aus GB-A-2 077 360 bekannt.

Hiervon ausgehend ist es Aufgabe der vorliegenden Erfindung, eine derartige Düse für ein kombiniertes Turbinen-Staustrahltriebwerk einzusetzen, bei der die beiden Triebwerke separat voneinander mit getrennten Auslaßkanälen ausgebildet sind.

Erfindungsgemäß wird diese Aufgabe dadurch gelöst, daß das Gasturbinenstrahltriebwerk und das Staustrahltriebwerk axial übereinander angeordnet sind, und deren Auslaßkanäle mit rechteckigen Querschnitten enden, und eine Trennwand zwischen beiden Auslaßkanälen vorgesehen ist, die sich in stromabwärtiger Richtung bis zum engsten Querschnitt der Schubdüse hin erstreckt, und an deren Endkante die Düsenklappen im Übergangsbereich von den Primärklappen zu den Sekundärklappen beidseitig strömungsgünstig anlegbar sind.

Der wesenltiche Vorteil dieser erfindungsgemäßen Anordnung ist darin zu sehen, daß bei Turbobetrieb, bei gleichzeitigem Turbo- und Staustrahlbetrieb und bei reinem Staustrahlbetrieb sowohl der optimale Engquerschnitt der Düse, als auch die Düsendivergenz auf einfache Weise optimal und verlustarm eingestellt werden können. Ein wesentlicher Vorteil besteht ferner darin, daß für alle drei Betriebsarten die gleiche Düsenanordnung verwendet werden kann, ohne daß Wirkungsgradkompromisse hingenommen werden müssen. Es kann vorteilhafterweise das Turbostrahltriebwerk und das Staustrahltriebwerk separat voneinander eingebaut und auch betrieben werden, während für beide Anordnungen trotzdem die gleiche Schubdüse zur Anwendung kommen kann. Dies wurde bisher nur für integrierte Turbinen-Staustrahltriebwerke als machbar angesehen, bei denen die Staustrahlbrennkammer gleichzeitig die Turbonachbrennerkammer ist, d.h., daß das Gasturbinentriebwerk und das Staustrahltriebwerk quasi konzentrisch zueinander angeordnet sind. Weiterhin von Vorteil ist, daß die Trennwand eine Querversteifung der Schubdüse bewirkt.

In erfindungsgemäßer Weiterbildung ist die Endkante der Trennwand zur Trennwandoberseite hin hochgezogen, so daß sich beim Anliegen des oberen Düsenklappenpaares (Turbobetrieb) eine strömungsgünstige Kontur von der Trennwandunterseite zur oberen Sekundärklappe hin erzielen läßt.

Eine vorteilhafte Weiterbildung der Erfindung sieht vor, daß die Trennwand beweglich ist, das in einer Ausführung der Erfindung dadurch geschieht, daß die Trennwand in axialstromaufwärtiger Richtung einziehbar ist. Vorteilhafterweise ist die Trennwand jedoch um eine in der Wandeben liegende Querachse schwenkbar, bzw. die Trennwand besteht aus einem ersten, stromaufwärtigen, starren Abschnitt, und einem sich daran strömungsgünstig anschließenden, zweiten schwenkbaren Trennwandabschnitt. Diese Anordnung hat den Vorteil, daß zur Verstellung von Engquerschnitt und Düsendivergenz die beiden Düsenklappenpaare einen wesentlich eingeschränkteren Verstellbereich aufweisen können, da ein Teil der kinematischen Anpassung durch die bewegliche Trennwand bzw. den beweglichen Trennwandabschnitt übernommen wird. Gegenüber einer starren Trennwand ist durch den geringeren Schwenkbereich der Düsenklappenpaare ferner ein strömungsgünstigerer Übergang in deren Extremstellungen erzielbar.

In bevorzugter Weiterbildung der Erfindung sind in den Düsenseitenwänden der Rechteckdüse beidseitig Mittel zum Arretieren der Trennwand in diskreten Positionen vorgesehen. Diese könnten beispielsweise als im Bereich der Endkante ausfahrbare Bolzen ausgebildet sein, die in entsprechenden Ausnehmungen der Trennwand einfahrbar sind. Hierdurch werden die sehr großen Druckkräfte (ca. 40 t) aufgenommen und die Schwenkvorrichtung entlastet. Es sind vorzugsweise drei verschiedene diskrete Positonen vorzusehen, nämlich eine erste mit maximaler positiver Neigung für Turbobetrieb, eine zweite etwa waagerechte Stellung für gleichzeitigen Turbo- und Staustrahlbetrieb, und eine dritte Position mit maximaler Abwärtsneigung für reinen Staustrahlbetrieb. Bei Bedarf können jedoch auch Zwischenpositionen einstellbar sein, oder der bewegliche Trennwandabschnitt kann sogar stufenlos verstellbar sein. Genauso ist es möglich, nur zwei diskrete Stellungen vorzusehen, zwischen denen umgeschaltet wird. Die Umschaltung von einer auf eine andere Position erfolgt vorzugsweise bei gleichzeitigem Turbo- und Staustrahlbetrieb, wobei auf beiden Seiten des beweglichen Trennwandabschnittes etwa gleicher Druck eingestellt wird und die Umstellung durch eine klein dimensionierte Schwenkvorrichtung erfolgen kann.

Eine weitere vorteilhafte Ausbildung der Erfindung sieht vor, daß verschließbare Umkehrschuböffnungen

2

vorgesehen sind, die vorzugsweise im Auslaßkanal des Turbotriebwerkes angeordnet sind. Somit ist es möglich, die beiden Düsenklappenpaare gleichzeitig in dichtenden Kontakt mit der Trennwand zu bringen, und somit beide Auslaßkanäle zu verschließen. Die Turboabgase sind dabei über die Umkehrschuböffnungen entgegen der Vortriebsrichtung ausblasbar, und bewirken so eine Abbremsung des Flugzeuges nach dem Landen.

Die Erfindung wird nachfolgend anhand der beigefügten Zeichnungen weiter erläutert. Dabei zeigt:

Fig. 1 einen schematischen Längsschnitt durch ein integriertes Turbo-staustrahltriebwerk mit verstellbarer Schubdüse,

Fig. 2 die Schubdüse mit Expansionsrampe bei Turbobetrieb,

Fig. 3 die Schubdüse bei gleichzeitigem Turbo- und Staustrahlbetrieb,

Fig. 4 die Schubdüse in Staustrahlbetrieb,

Fig. 5 die Schubdüse bei Umkehrschubbetrieb,

Fig. 6 eine andere Ausführung mit verschwenkbarer Trennwand im Turbobetrieb,

Fig. 7 diese Schubdüse bei gleichzeitigem Turbo- und Staustrahlbetrieb,

Fig. 8 diese Schubdüse im Staustrahlbetrieb.

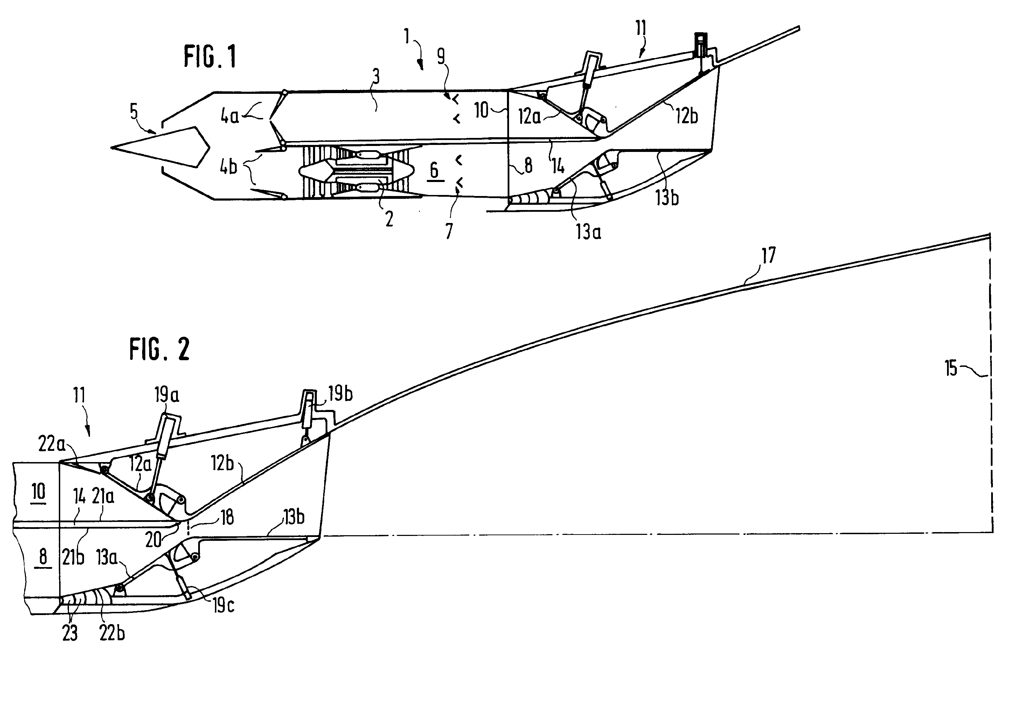

In Fig. 1 ist ein integriertes Turbo-Staustrahltriebwerk 1 im Längsschnitt dargestellt, das im wesentlichen aus einem Gasturbinentriebwerk 2 mit Verdichter, Brennkammer und Turbine besteht, und einem parallel dazu angeordneten Staustrahltriebwerk 3. Beide Teiltriebwerke 2, 3 sind über Klappen 4a,b alternativ verschließbar, so daß die durch den Lufteinlaß 5 anströmende Luft entweder dem Gasturbinentriebwerk 2, dem Staustrahltriebwerk 3 oder beiden zuführbar ist, Stromab des Gasturbinentriebwerkes 2 ist eine Nachbrennkammer 6 mit Einspritzvorrichtungen 7 vorgesehen, wobei die Nachbrennkammer 6 von rundem Querschnitt im Bereich des hinteren Ende des Gasturbinentriebwerkes 2 zu rechteckigem Querschnitt im Bereich der Hinterkante des Turboauslaßkanals 8 übergeht. Das Staulufttriebwerk 3 besteht im wesentlichen aus Einspritzvorrichtungen 9, stromab derer sich der Stauluftauslaßkanal 10 bis zum Bereich seiner Hinterkante in rechteckige Form ausbildet.

Die eigentliche Schubdüse 11 besteht aus zwei Düsenklappenpaaren, wobei das obere Düsenklappenpaar 12a,b aus Primärklappe 12a und Sekundärklappe 12b besteht, und das untere Düsenklappenpaar 13a,b aus Primärklappe 13a und Sekundärklappe 13b besteht.

Die beiden Auslaßkanäle 8, 10 sind durch eine quer angeordnete Trennwand 14 getrennt, die sich derart bis zu den Düsenklappenpaaren 12a,b bzw. 13a,b erstreckt, daß eine oder beide Düsenklappenpaare dichtend an der Trennwand 14 anliegen können. In der in Fig. 1 gezeigten Stellung befindet sich das Triebwerk 1 in Turbobetriebsstellung, d.h., daß die Klappen 4a geschlossen sind, und somit das Staustrahltriebwerk 3 nicht mit Luft versorgt wird. Gleichzeitig sind die Klappen 4b des Gasturbinentriebwerkes 2 offen. Ferner ist das obere Düsenklappenpaar 12a,b derart nach unten gefahren, daß es dichtend an der Trennwand 14 anliegt, so daß der Stauluftauslaßkanal 10 verschlossen ist. Gleichzeitig befindet sich das untere Düsenklappenpaar 13a, b in einer für die aktuelle Flugmachzahl optimalen Stellung.Dabei ist es wesentlich, daß das obere Düsenklappenpaar 12a,b und die Trennwand 14 derart abdichten, daß kein Turboheißgas des hohen Druckes im Engquerschnitt 18 der Schubdüse 11 von hinten in das Staustrahltriebwerk 3 gelangt und wegen des Überdruckes gegenüber den Lufteinlaß wieder vom Gasturbinenstrahltriebwerk 2 angesaugt wird.

In Fig. 2 ist die Schubdüse 11 in der gleichen Stellung gezeigt, wobei ferner dargestellt ist, daß die eigentliche Düsenendfläche 15 durch das Ende 16 der Expansionsrampe 17, beispielsweise der Flugzeugunterwand und die Verlängerung der unteren Sekundärklappe 13b definiert ist. Der Engquerschnitt 18 der Schubdüse 11 wird durch das Verstellen der oberen oder unteren Düsenklappenpaare 12a, b und 13a, b bewirkt, während der Auslaßquerschnitt und somit die Divergenz der Düse das Verhältnis von Düsenendfläche 15 zu Engquerschnitt 18 im wesentlichen durch die Stellung der unteren Sekundärklappe 13b bestimmt wird.

Die Verstellung der oberen Primärklappe 12a, erfolgt über eine erste Verstellvorrichtung 19a, und die obere Sekundärklappe 12b wird über die zweite Verstellvorrichtung 19b eingestellt. Das untere Düsenklappenpaar 13a, b wird gemeinsam durch eine dritte Verstellvorrichtung 19c verstellt.

Die Endkante 20 der Trennwand 14 ist zur Trennwandoberseite 21a hin hochgezogen, so daß sich in der gezeigten Stellung eine strömungsgünstige Kontur von der Trennwandunterseite 21b, über die Sekundärklappe 12b zur Expansionsrampe 17 hin ergibt. Gleichzeitig muß die Trennwandunterseite 21a im Bereich der Endkante 20 so geformt sein, daß sich im Zusammenwirken mit dem den Strömungsquerschnitt definierenden unteren Düsenklappenpaar 13a,b stets eine Querschnittsverengung und somit Strömungsbeschleunigung bis zum engsten Querschnitt 18 hin ergibt.

Die Trennwandoberseite 21b ist angepaßt an die Kontur der unteren Sekundärklappe 13b ausgebildet, um überall einen nach unten gezogenen Verlauf hervorzurufen. Gleichzeitig soll im Zusammenwirken mit dem oberen Düsenklappenpaar 12a, b eine konvergente Düse vor dem Engquerschnitt 18 definiert sein. Die Kontur im Engquerschnitt selber kann als scharfe Kante ausgebildet sein. Im Querschnitt hat der Bereich der Endkante 20 etwa schnabelartige Kontur.

Um einen günstigen Strömungsübergang von den Auslaßkanälen 8, 10 zu den Primärklappen 12a, 13a zu erzielen, sind Leitbleche 22a, b an der Schubdüse 11 montiert, wobei das untere Leitblech 22 nach vorne zurückziehbar ist, um Umlenkbleche 23 für Umlenkschubbetrieb freizulegen.

Zum Start des Flugzeugs ohne Nachverbrennung wird die Schubdüse 11 etwa in die in Fig. 2 gezeigten Stellung gefahren, wobei die obere Sekundärdüse 12b mittels der zweiten Verstellvorrichtung 19b nach unten gefahren ist. Diese zunächst einen strömungsungünstigen Übergang von der oberen Sekundärklappe 12b zur Expansionsrampe 17 hervorrufende (nicht dargestellte) Stellung ist erforderlich, da bei diesem Betriebsbereich eine geringe Divergenz der Schubdüse 11 erforderlich ist. Dies wird dadurch erreicht, daß der Auslaßquerschnitt 15 in dieser Stellung nicht durch die Expansionsrampe 17, sondern durch die gedachte Verlängerung der oberen Sekundärklappe 12b festgelegt ist. Bei zunehmender Flugmachzahl wird eine vergrößerte Divergenz gefordert, so daß die obere Sekundärklappe 12b zurück in die in Fig. 2 gezeigte Stellung gefahren wird. Bei großer Machzahl für Turbobetrieb, also im Bereich von etwa 2 Mach, wird bei Nachverbrennung die in Fig. 2 gezeigte Düsenstellung vorliegen.

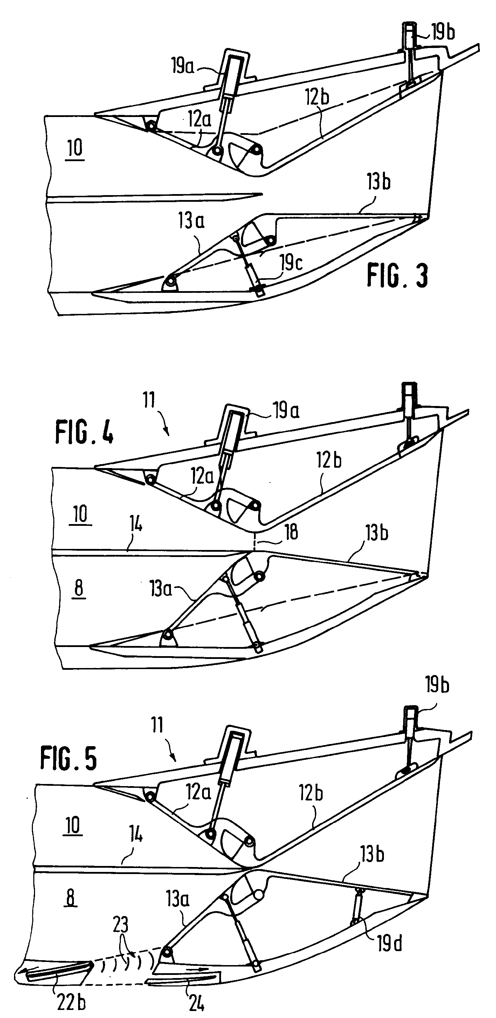

Bei noch weiter erhöhter Flugmachzahl wird das Staustrahltriebwerk 3 zugeschaltet werden, was dadurch geschieht, daß einerseits die Klappen 4a (Fig. 1) geöffnet werden, und gleichzeitig mittels der ersten Verstellvorrichtung 19a - wie in Fig. 3 gezeigt - das obere Düsenklappenpaar 12a, b hochgefahren wird, so daß der Stauluftauslaßkanal 10 freigelegt wird. Bei weiter zunehmender Geschwindigkeit wird mittels der dritten Verstellvorrichtung 19c das untere Düsenklappenpaar 13a,b unter Verengung des Turboengquerschnittes hochgefahren. Bei Druckunterschieden in den beiden Düsen wird sich die Expansion frei einstellen.

Wie in Fig. 4 dargestellt, wird bei noch weiter zunehmender Flugmachzahl das untere Düsenklappenpaar 13a, b ganz gegen die Trennwand 14 gefahren, wodurch der Turboauslaßkanal 8 vollkommen verschlossen wird. Zunächst wird jedoch das obere Düsenklappenpaar 12a, 12b weiter nach oben gefahren sein, wobei der Engquerschnitt 18 eine gegenüber der in Fig. 4 gezeigten Stellung zunächst vergrößert wird. Erst etwa bei Erreichen der Höchstgeschwindigkeit wird eine sehr große Divergenz der Schubdüse 11 erforderlich, so daß das obere Düsenklappenpaar 12a, 12b mittels der ersten Verstellvorrichtung 19a in die in Fig. 4 gezeigte Stellung für Höchstgeschwindigkeit gefahren wird.

Fig. 5 zeigtdie Stellung der Schubdüse 11 nach dem Landen des Flugzeuges im Umkehrschubbetrieb, wobei sowohl das obere 12a, 12b, als auch das untere Düsenklappenpaar 13a, 13b dichtend gegen die Trennwand 14 gefahren sind, wodurch der Stauluftauslaßkanal 10 verschlossen ist. Durch das Wegschieben des unteren Leitbleches 22b und einer Deckplatte 24 ist der Turboauslaßkanal 8 mit einer Umgebung verbunden. Mittels der Umlenkbleche 23 wird in dieser Betriebsstellung das Abgas des Gasturbinentriebwerkes 2 entgegen der Vortriebsrichtung umgelenkt und erzeugt so einen Umlenkkehrschub zur Abbremsung des Flugzeuges.

In dieser gezeigten Ausführung ist die untere Sekundärklappe 13b mit einer Verstellvorrichtung 19d versehen, wodurch diese separat von der unteren Primärklappe 13a verstellbar ist. Dabei ist es möglich, auf die Verstellvorrichtung 19b der oberen Sekundärklappe 12b zu verzichten.

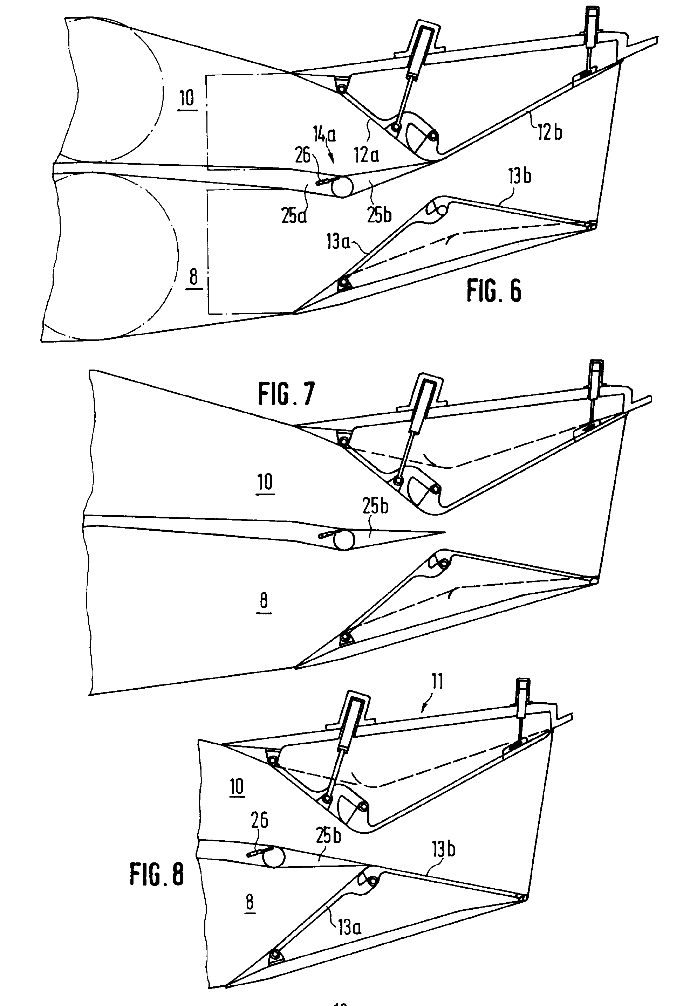

Eine andere Ausführung der Erfindung ist in den Fig. 6 bis 8 in den unterschiedlichen Betriebsstellungen dargestellt. Diese Ausführungsform ist dadurch gekennzeichnet, daß die Trennwand 14a aus einem ersten festen Abschnitt 25a, und einem schwenkbaren Trennwandabschnitt 25b besteht, der um eine in dem festen Trennwandabschnitt 25a liegenden Querachse schwenkbar ist. Die Verstellung des schwenkbaren Trennwandabschnittes 25b erfolgt mittels der Schwenkvorrichtung 26. In der in Fig. 6 gezeigten Stellung befindet sich das Triebwerk im Turbobetrieb, wobei der Verschluß des Stauluftauslaßkanales 10 nicht lediglich durch Herunterfahren des oberen Düsenklappenpaares 12a, 12b erfolgt, sondern gleichzeitig der bewegbare Trennwandabschnitt 25b nach oben geschwenkt ist. Hierdurch wird vorteilhafterweise der durch das Düsenklappenpaar erforderliche Schwenkbereich zum Verschließen des Stauluftauslaßkanales 10 vermindert.

Ebenfalls in Fig. 6 dargestellt ist die Veränderung der Querschnitte von Turboauslaßkanal 8 und Stauluftauslaßkanal 10 in Strömungsrichtung von rundem zum eckigen Querschnitt. Ebenfalls gestrichelt dargestellt ist der maximal notwendige Bewegungsbereich der beiden Düsenklappenpaare 12a, b und 13a, b.

In Fig. 7 ist die anordnung gemäß Fig. 6 bei gleichzeitigem Turbo- und Staustrahlbetrieb dargestellt, wobei sich der bewegbare Trennwandabschnitt 25b etwa in einer Mittelstellung befindet, und beide Auslaßkanäle 8 und 10 geöffnet sind. Gemäß Fig. 8 schließlich befindet sich diese Ausführungsform des Triebwerkes im Staustrahlbetrieb, d.h. der Turboauslaßkanal 8 ist bei gleichzeitigem Stillstand des nicht dargestellten Gasturbinentriebwerkes 2 verschlossen, während die Schubdüse 11 ausschließlich dem Stauluftauslaßkanal 10 zugeordnet ist. In dieser Stellung ist hier dazu der Trennwandabschnitt 25b mittels der Schwenkvorrichtung 26 in seine untere Endstellung verfahren, und das untere Düsenklappenpaar 13a, b ist soweit hochgefahren, daß es dichtend am Trennwandabschnitt 25b anliegt.

4

EP 0 392 526 B1

**Patentansprüche**

1. Schubdüse für ein mit kombinierten Turbinen-Staustrahltriebwerken ausgerüstetes Fluggerät, bei dem ein variabler Düsenkonturverlauf zwischen jeweils oberen und unteren Primär- und Sekundärklappen ausgebildet wird, die an parallelen Wandflächen eines viereckigen Düsengehäuses abdichtend beweglich geführt sind, wobei die Primärklappen jeweils stromaufwärtig am Düsengehäuse schwenkbar angelenkt sind, und die Sekundärklappen jeweils an,von der Düsenströmung abgewandter Seite befindlichen Drehpunkten der Primärklappen schwenkbar angelenkt und mit zu diesen Drehpunkten im wesentlichen konzentrischen Abschnitten, aerodynamisch flächendeckend in die primärklappen einfahrbar, oder aus diesen ausfahrbar sind, dadurch gekennzeichnet, daß das Gasturbinenstrahltriebwerk (2) und das Staustrahltriebwerk (3) axial übereinander angeordnet sind, und deren Auslaßkanäle (8,10) mit rechteckigen Querschnitten enden, und eine Trennwand (14) zwischen beiden Auslaßkanälen (8,10) vorgesehen ist, die sich in stromabwärtiger Richtung bis zum engsten Querschnitt (18) der Schubdüse (11) hin erstreckt, und an deren Endkante (20) die Düsenklappen (12,13) im Übergangsbereich von den Primärklappen (12a,13a) zu den Sekundärklappen (12b,13b) beidseitig strömungsgünstig anlegbar sind.

2. Schubdüse nach Anspruch 1, dadurch gekennzeichnet, daß die Endkante (20) der Trennwand (14) zur Trennwandoberseite (21a) hin hochgezogen ist.

3. Schubdüse nach anspruch 1, dadurch gekennzeichnet, daß die Trennwand (14) beweglich ist.

4. Schubdüse nach Anspruch 3, dadurch gekennzeichnet, daß die Trennwand (14) in axialer Richtung verschiebbar ist.

5. Schubdüse nach anspruch 3, dadurch gekennzeichnet, daß die Trennwand (14a) um eine in der Wandebene liegende Querachse schwenkbar ist.

6. Schubdüse nach Anspruch 5, dadurch gekennzeichnet, daß die Trennwand aus einem starren (25a) und einem schwenkbaren Trennwandabschnitt (25b) besteht.

7. Schubdüse nach Anspruch 5, dadurch gekennzeichnet, daß in Düsenseitenwänden beidseitig Mittel zum arretieren der Trennwand (14a) in diskreten Positionen vorgesehen sind.

8. Schubdüse nach Anspruch 5, dadurch gekennzeichnet, daß zwei oder drei diskrete Stellungen für die bewegliche Trennwand (14a) vorgesehen sind.

9. Schubdüse nach Anspruch 1, dadurch gekennzeichnet, daß im Turboauslaßkanal (8) verschließbare Umkehrschuböffnungen vorgesehen sind.

10. Verfahren zur Schubdüsenverstellung mittels der Vorrichtung nach einem der Ansprüche 1 bis 9, dadurch gekennzeichnet, daß

– bei Turbobetrieb das obere Düsenklappenpaar (12a,b) dichtend an der Trennwand (14) anliegt, und Engquerschnitt (18) und Düsendivergenz der Schubdüse (11) durch Verstellen der oberen Sekundärklappe (12b) und des unteren Düsenklappenpaares (13a,b) durchgeführt wird.

– bei gleichzeitigem Turbo- und Staustrahltriebwerk das obere Düsenklappenpaare (12a,b) von der Trennwand (14) abgehoben wird, und die erforderlichen Engquerschnitte und Divergenzen durch die beiden Düsenklappenpaare (12,b,13a,b) verstellt werden.

– bei Staustrahlbetrieb das untere Düsenklappenpaar (13a,b) dichtend an der Trennwand anliegt, und Engquerschnitt und Divergenz der Schubdüse (11) durch das obere Düsenklappenpaar (12a,b) eingestellt werden.

– bei Umlenkschubbetrieb beide Düsenklappenpaare (12a,b, 13a,b) beidseitig dichtend an der Trennwand (14) anliegen und stromauf der Düsenklappe (13a) angeordnete Umkehrschuböffnungen freigelegt werden.

**Claims**

1. A thrust nozzle for an aircraft equipped with combined turbine-ram-jet propulsion units, wherein a variable nozzle contour is developed between respective upper and lower primary and secondary flaps which are sealingly movably guided on parallel wall surfaces of a rectangular nozzle housing, the primary flaps being pivotally hinged on the upstream side on the nozzle housing, the secondary flaps being pivotally hinged at pivot points of the primary flaps disposed on the side remote from nozzle flow and with portions which are substantially concentric with these pivot points being movable into or out of the primary flaps in such a way that the surfaces overlap aerodynamically, characterised in that the gas turbine jet propulsion unit and the ram-jet propulsion unit (3) are disposed axially one above the other, their outlet ducts (8, 10) terminating in rectangular cross-sections and in that a separating wall (14) is provided between the two outlet ducts (8, 10) and extends in a downstream direction as far as the narrowest cross-section (18) of the thrust nozzle (11) and in that at their terminal edge (20) the nozzle flaps (12, 13) can be applied to both sides in streamlined fashion at the transition from the primary flaps (12a, 13a) to the secondary flaps (12b,13b).

2. A thrust nozzle according to Claim 1, characterised in that the terminal edge (20) of the separating wall (14) is drawn up towards the top (21a) of the separating wall (14).

3. A thrust nozzle according to Claim 1, characterised in that the separating wall (14) is movable.

4. A thrust nozzle according to Claim 3, characterised in that the separating wall (14) is displaceable in an axial direction.

5. A thrust nozzle according to Claim 3, characterised in that the separating wall (14a) is adapted to pivot about a transverse axis located in the plane of the wall.

6. A thrust nozzle according to Claim 5, characterised in that the separating wall consists of a rigid portion (25a) and a pivotable portion (25b).

7. A thrust nozzle according to Claim 5, characterised in that means of locking the separating wall (14a) in distinct positions are provided on both sides, on the side walls of the nozzle.

8. A thrust nozzle according to Claim 5, characterised in that two or three distinct positions are provided for the movable separating wall (14a).

9. A thrust nozzle according to Claim 1, characterised in that occludable reverse thrust ports are provided in the turbo outlet duct (8).

10. A method of thrust nozzle adjustment by means of the device according to one of Claims 1 to 9, characterised in that:

– during turbo operation, the upper pair of nozzle flaps (12a, b) rest on the separating wall (14) in sealing-tight manner and narrow cross-section (18) and nozzle divergence of the thrust nozzle (11) are carried out by adjustment of the upper secondary flap (12b) and of the lower pair of nozzle flaps (13a, b);

– during simultaneous turbo and ram-jet propulsion, the upper pair of nozzle flaps (12a, b) are lifted off the separating wall (14) and the necessary narrow cross-sections and divergences are adjusted by both pairs of nozzle flaps (12a,b,13a,b);

– during ram-jet operation the lower pair of nozzle flaps (13a,b) bear on the separating wall in sealing-tight manner and narrow cross-section and divergence of the thrust nozzle (11) are adjusted by the upper pair of nozzle flaps (12a,b); and

– during reverse thrust operation, both pairs of nozzle flaps (12a,b,13a,b) bear on both sides of the separating wall (14) in sealing-tight fashion and in that reverse thrust ports disposed upstream of the nozzle flap (13a) are exposed.


## Revendications

1. Tuyère de poussée pour un engin volant équipé d'une combinaison d'un turboréacteur et d'un statoréacteur, avec un tracé de tuyère variable entre chaque fois les volets primaires et secondaires, supérieurs et inférieurs qui sont guidés de manière mobile, étanches contre des surfaces de paroi parallèles d'un corps de tuyère rectangulaire, les volets primaires étant chaque fois articulés de manière pivotante, en amont sur le corps de la tuyère et des volets secondaires étant articulés de manière pivotante respectivement en des points de rotation des volets primaires situés du côté opposé de l'écoulement de la tuyère, et susceptible d'entrer dans les volets primaires avec ces points de rotation, dans des segments essentiellement concentriques, en recouvrement de surface aérodynamique, ou de sortir de ces volets, tuyère caractérisée en ce que la turbine à gaz (2) et le statoréacteur (3) sont superposés axialement et leurs canaux de sortie (8,10) se terminent par des sections rectangulaires, une cloison (14) étant prévue entre les deux canaux de sortie (8,10), cette cloison s'étendant dans la direction aval jusqu'à la section la plus étroite (18) de la tuyère de poussée (11) et les volets de tuyère (12,13) s'appliquent dans la zone transitoire entre les volets primaires (12a,13a) et les volets secondaires (12b,13b), contre l'arête d'extrémité (20) de la tuyère, de part et d'autre de façon avantageuse pour l'écoulement.

2. Tuyère de poussée selon la revendication 1, caractérisée en ce que l'arête d'extrémité (20) de la cloison (14) est relevée vers la face supérieure (21a) de la cloison.

3. Tuyère de poussée selon la revendication 1, caractérisée en ce que la cloison (14) est mobile.

4. Tuyère de poussée selon la revendication 3, caractérisée en ce que la cloison (14) peut coulisser dans la direction axiale.

5. Tuyère de poussée selon la revendication 3, caractérisée en ce que la cloison (14a) peut pivoter autour d'un axe transversal situé dans le plan de la cloison.

6. Tuyère de poussée selon la revendication 5, caractérisée en ce que la cloison se compose d'une partie rigide (25a) et d'une partie de cloison (25b) pivotante.

7. Tuyère de poussée selon la revendication 5, caractérisée en ce que dans les parois latérales de la tuyère, de part et d'autre il y a des moyens pour bloquer la cloison (14a) dans des positions discrètes.

8. Tuyère de poussée selon la revendication 5, caractérisée par deux ou trois positions discrètes pour la cloison mobile (14a).

9. Tuyère de poussée selon la revendication 1, caractérisée par des orifices d'inversion de poussée, obturables dans le canal de sortie (8) du turboréacteur.

10. Procédé de réglage d'une tuyère de poussée à l'aide du dispositif selon les revendications 1 à 9, caractérisé en ce que :

– pour le fonctionnement en turboréacteur, la paire supérieure de volets de tuyère (12a,b) s'applique de manière étanche contre la cloison (14) et la section étroite (18) et la divergence de la tuyère de poussée (11) sont obtenues par réglage du volet secondaire supérieur (12b) et de la paire de volets inférieurs de tuyère (13a,b),

– pour un fonctionnement simultané en turboréacteur et statoréacteur, la paire supérieure de volets de tuyère (12a,b) est soulevée de la cloison (14) et on réalise la section étroite nécessaire et la divergence à l'aide des deux paires de volets de tuyère (12a,b,13a,b),

– pour le fonctionnement en statoréacteur, la paire inférieure de volets de tuyère (13a,b) est appliquée de manière étanche contre la cloison et on réalise la section étroite et la divergence de la tuyère de poussée (11) par la paire supérieure de volets de tuyère (12a,b),

– pour le fonctionnement avec inversion de poussée, on applique les deux paires de volets de tuyère (12a,b,13a,b) de manière étanche, des deux côtés contre la cloison (14) et on libère les orifices d'inversion de poussée prévus en amont du volet de tuyère (13a).

FIG.1

FIG. 2

EP 0 392 526 B1

FIG. 3

FIG. 4

FIG. 5

FIG. 6

FIG. 7

FIG. 8